(19) Europäisches Patentamt
European Patent Office
Office européen des brevets

(11) EP 2 070 328 B1

(12) **EUROPEAN PATENT SPECIFICATION**

(45) Date of publication and mention
of the grant of the patent:
**16.02.2011 Bulletin 2011/07**

(21) Application number: **06809509.0**

(22) Date of filing: **05.10.2006**

(51) Int Cl.:
***G06T 1/00*** (2006.01)

(86) International application number:
**PCT/IB2006/053644**

(87) International publication number:
**WO 2008/041061 (10.04.2008 Gazette 2008/15)**

(54) **WATERMARK DETECTION METHOD FOR BROADCASTING**

WASSERZEICHENDETEKTIONSVERFAHREN FÜR BROADCASTING

PROCÉDÉ DE DÉTECTION DE FILIGRANE POUR LA DIFFUSION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**17.06.2009 Bulletin 2009/25**

(73) Proprietor: **Vestel Elektronik Sanayi ve Ticaret A.S.**
**45030 Manisa (TR)**

(72) Inventors:
• **ALATAN, Aydin A.**
**06531 Ankara (TR)**
• **KOZ, Alper**
**06531 Ankara (TR)**
• **CIGLA, Cevahir**
**06531 Ankara (TR)**

(74) Representative: **Cayli, Hülya**
**Paragon Consultancy Inc.**
**Koza Sokak No: 63/2**
**GOP**
**06540 Ankara (TR)**

(56) References cited:
**EP-A- 1 404 129      US-A1- 2002 067 914**
**US-B1- 6 530 021**

## EP 2 070 328 B1

**Description**

**Field of Invention**

This invention relates to a method of detection for invisible watermarks in virtual views generated for arbitrary camera angles determined by the viewer, by interpolating the recorded transmissions belonging to cameras viewed same scene at different angles.

**Background of the Invention**

Currently, invisible watermarks indicating broadcaster's copyright are embedded on the views recorded by a single camera and corresponding views are transmitted to the user as such. In televisions manufactured as general purpose, these invisible watermarks are always embedded on the views and users could see these watermarks only with a special device. Utilization of invisible watermark is a new approach based on embedded marks in the view to help understanding who owns the broadcasting, copy and distribution rights especially in case of illegal use, copy and sale of these views.

Together with developing video record and demonstration technology, wide spreading of free-view televisions makes watermarks forming and detection difficult. Free-view televisions were designed to have displaying capability of multiple views to the user obtained from cameras at the same time but at different positions and angles on the same scene. Currently, by virtue of receiver devices called as set-top-box that is attached to the televisions, user can choose a view recorded at a desired angle between multiple video views shown in these televisions. In other words, user, if the scene was recorded with multiple cameras, has a chance to choose desired camera position and desired angle belonging to that scene. Also, set-top-box device can create a virtual view between two neighbor cameras using interpolation algorithms therein and allows user to watch this virtual view. This virtual view is assumed as obtained from a virtual camera monitoring the scene at a different angle from the ones transmitted to set-top-box whose position and angle were recorded previously.

It is possible to embed different invisible watermarks on each view recorded in multi video format in the known art. Currently, these views with watermarks thereon can be watched in free-view televisions without detection, but it is not possible to detect watermarks formed on virtual view that the user chose. Also, a distinguishable watermark detection on these views could not be done in case of the user to copy this virtual view and sale to third person by multiplying.

By the method according to the invention, it is possible to detect the distinguishable watermarks on the views belonging to the virtual cameras determined by the arbitrary choose of the user in free-view televisions, it is detected whose the watermark is and also from which virtual camera at which position and angle that said virtual view is obtained. Besides, it is possible to identify persons performing illegal view transmission by using a secret tag identifying the recording device on the virtual view and by detecting the same. In this invention, the usage of the method mentioned in published patent application US 6,097394 is preferred for generating virtual camera view for free-view television. Although invention can be applied for other algorithms of virtual camera view generation, it is especially suitable for algorithm mentioned in the patent application US 6,097,394.

In another patent application US 2002/067914 A1, a transport packet generation apparatus and method used in a system which delivers content such as movies and music is disclosed. In said application, watermarks are inserted to the data stream in order to prevent stream being copied illegally.

In another patent application US6530021 B1, a method and a system for preventing the unauthorized playback of broadcasted digital data streams is disclosed. In said application, watermarks are embedded to digital data stream and watermark embedded digital data stream is encrypted. Said signal is broadcasted with a ticket and when the signal is received signal is decrypted embedded watermark is compared with the ticket. By this way, digital data stream is prevented from being played without using right ticket.

In another patent application EP1404129 A, a method for protecting audiovisual content is disclosed. In this application, watermark is added to the data stream at the user side. Decoders/receivers are used for adding watermark to data stream.

**Object of the Invention**

The object of the invention is; in case of generation of virtual camera views generated by the user's choice in arbitrary angles; to detect embedded invisible information on generated virtual view from the view arrays and to determine whom these contents belong; and to identify persons who perform illegal view transmission by also detecting a secret tag identifying the decoder device generating the virtual view.

Another object of the invention is to detect from which camera at which position and angle that said virtual view was generated.

## Abbreviations

MW : Multi-view video
IBR : Image base rendering
FVTV : Free-view TV
FVWE : Free-view watermark embedder
AVG : Arbitrary view generator
AVE : Arbitrary view extractor
FVWD : Free-view watermark detector
LFR : Light field rendering
HVS : Human visual system
FFT : Fast Fourier Transform
SPOMF : Symmetrical Phase Only Matched Filtering
IDFT : Inverse Discrete Fourier Transform

## Description of Abbreviations

Multi-view Video (MW): N video sequences, recorded by a camera array of N calibrated cameras, observing the same scene from different orientations and locations.

Image-based Rendering (IBR): Image-based rendering is a method of creating a virtual view in between the views from multi view videos arrays recorded by physically available cameras. This virtual image is obtained, by the assumption of the existence of a virtual camera, in between other physically available cameras, which are generating the multi-view video. The rendering of the image is obtained by different algorithms, usually with no utilization of any 3-D geometric information.

Free-view TV (FVTV): A television, whose set-top boxes capable of decoding multi-view video and rendering any arbitrary view based on viewer interaction by specific image-based rendering algorithms.

Free-view Watermark Embedding (FVWE): A method which inserts the same hidden data into multi-view video frames in order to be extracted in a television receiver (set-top box) via watermark detection algorithms. FVWE might use any well-known method from the literature that is usually utilized for still images or mono-view video. Except for the constraint for hiding the same information on every view, there is no claimed novelty in terms of the data hiding technology.

Arbitrary view generation (AVG): A method, which is capable of rendering the user-selected view by utilizing the multi-view video frames and an image-based rendering algorithm. For the subject matter invention, especially the method mentioned in the published patent application US 6,097,394 is used.

Arbitrary view extraction (AVE): A method, which is capable of detecting the orientation and location of the virtual camera (with respect to the physically available camera array) by assuming the same IBR algorithm in AVG, and by using the generated image from the arbitrary view and MVV frames. Arbitrary view extraction belongs to subject matter inventions and determines the location of the arbitrarily located virtual camera from the rendered image and multi-view, as well as by using the rendering algorithm. In prior art, such an extraction is not used, since the only concern has been rendering/synthesizing the view for a given virtual camera location with the best visual quality. In contrast, the free-view watermarking problem requires the estimation of the location of the virtual camera from the rendered image.

Free-view Watermark Detection (FVWD): A method, which is capable of generating a virtual watermark by using the automatically extracted location of the rendered image (via AVE module) and correlates this "rendered watermark" with the rendered image, which has also a watermark, to detect its existence. FVWD also belongs to subject matter invention and utilizes image-based rendering technology to determine a "rendered watermark", which should have been on the rendered image (whose location is determined by AVE module), if the MW contains watermarks. By correlating the "rendered watermark" with the rendered image, the existence of the watermark can be determined. If, initially, there were no watermarks on the original multi-view video, the resulting rendered image should yield low similarity (correlation) with the "rendered watermark".

## Detailed Description of the Invention

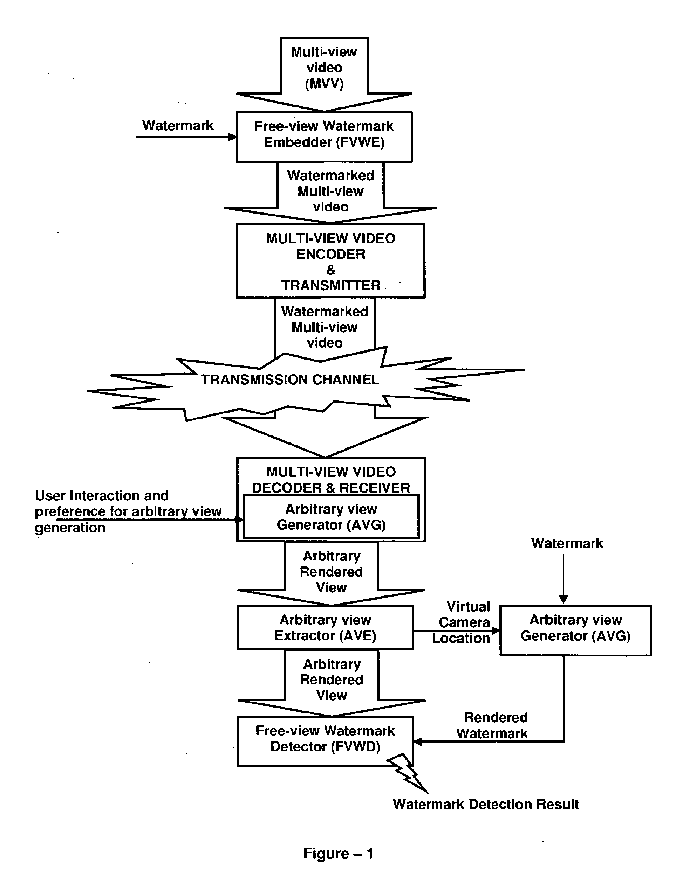

The invention can be illustrated by the system block diagram in Figure 1. In this figure, the FVWE, AVG, AVE and FVWD are the important blocks of the invention that should be examined in detail. Apart from these blocks, the rest of the diagram in Figure 1 is similar to a typical watermark embedding and detection system. The original content is embedded with some hidden information, called watermark. Then, this content with the hidden information is assumed to be transmitted through any channel (i.e. satellite, terrestrial or cable communication) to the television receiver (i.e.

set-top box). In the receiver, the content is compared against the same hidden data in order to check the existence of this information within the content. Moreover, for a free-view TV application, the content should be in the form of a MW, as in Figure 1, rather than a mono-view video.

Arbitrary View Generation (AVG):

Although, the system diagram in Figure 1, utilizes AVG in a later stage, the fundamental technology behind AVG, which is IBR, should be explained first.

In the early days of the related research, IBR has evolved according to the scene structure and characteristics. In the initial stages, IBR has been developed for static scenes that involve only one depth layer or one object. Later, the technology for the static scenes is adapted to the scenes consisting of multiple depth layers or multiple objects. In the present stage, the real time demonstrations of FVTV are available which requires the rendering of not only static scenes, as well as some dynamic scenes. This invention mainly focuses on the watermarking for the static scenes consisting of only one depth layer, which forms the fundamental case in the development of IBR technology.

In the literature, the most well known and useful IBR representation is the light field, due to its simplicity that only the original images are used to construct the virtual views. This representation constitutes also one of the main technologies behind FVTV. Therefore, the proposed watermarking method is specially tailored for the aim of watermark extraction from the virtual views, which are generated by using light field rendering (LFR).

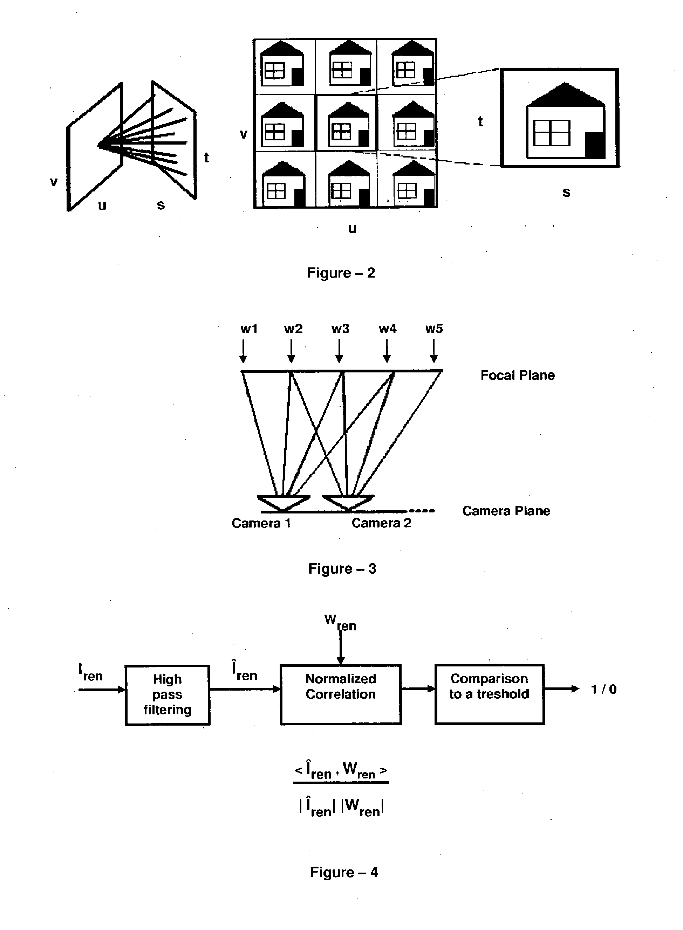

In LFR, a light ray is indexed as $(u_o, v_o, s_o, t_o)$, where $(u_o, v_o)$ and $(s_o, t_o)$ are the intersections of the light ray with the two parallel planes namely, camera (uv) plane and focal (st) plane. The planes are discretized so that a finite number of light rays are recorded. If all the discretized points from the focal plane are connected to one point on the camera plane, an image (2D array of light fields) is resulted. Actually, this resulting image becomes sheared perspective projection of the camera frame at that point. Four dimensional (4D) representation of the light field can also be interpreted as a two dimensional (2D) image array, as it is shown in Figure 2. the camera images forming the image array are called light field images. In this 4D representation, every light ray is represented with $(u_o, v_o, s_o, t_o)$, which denotes the locations of the intersection of these rays with camera (uv) and focal (st) planes. The watermark is embedded to each image of this 2D image array.

In order to generate the view for an arbitrarily located camera (defined according to the uv-plane), every pixel (defined according to the st-plane) on this novel view, is interpolated from the available light fields by some simple interpolation techniques, such as the $0^{th}$ order interpolation, denoted as nearest neighbor interpolation or the $1^{st}$ order interpolation, called as bilinear interpolation. While the nearest light fields from the adjacent cameras are utilized to determine the intensity value of an arbitrary pixel on the novel view for nearest neighbor interpolation, the bilinear approach utilizes a weighted average for the neighboring light fields of the neighboring cameras for finding the intensity of the same pixel. The details are examined in US 6,097,394.

Free-view Watermark Embedding (FVWE):

The proposed method embeds the watermark into each image of the light field slab by exploiting spatial sensitivity of HVS (Human visual system). For that purpose, the watermark is modulated with the resulting output image after filtering each light field image by a 3x3 high pass filter and spatially added to that image. This operation decreases the watermark strength in the flat regions of the image, where HVS is more sensitive, and increases the embedded watermark energy in the detailed regions, in which HVS is less sensitive.

There are two critical points in the embedding stage. First of all, the watermark is embedded to the light field images. Secondly, the watermark component added to each image pixel is determined according to the intersection of the light ray corresponding to that pixel with the focal plane. The same watermark component is added to the pixels of different camera frames, whose corresponding light rays are intersected at the same point in the focal plane, as illustrated in Figure 3. In this figure, as an example, while the added watermark components to the light field image corresponding to the first camera are $[w_o, w_1, w_2, w_3...]$, the added components for the second camera are $[w_1, w_2, w_3...]$, i.e. beginning from $w_1$. The rationale behind such a procedure is to avoid the superposition of the different watermark samples, belonging to different camera frames in the interpolation operations during the rendering. Otherwise, such a superposition severely degrades the performance of the correlation operation in the watermark detection stage. Moreover, such a procedure should also avoid the flickering type of distortion during rendering, since the watermark component in any rendered view will be identical to the watermark components in the adjacent original views.

The same watermark is added on each light field image, as follows:

$$I_{uv}^{*}(s,t) = I_{uv}(s,t) + \alpha . H_{uv}(s,t) . W(s,t) \qquad (1)$$

where $I_{uv}$ is the light field image corresponding to the camera at the $(u,v)$ position, $H_{uv}$ is the output image after high pass filtering, $\alpha$ is the global scaling factor to adjust the watermark strength, W is the watermark sequence generated from a Gaussian distribution with zero mean and unit variance and finally, $I_{uv}^{*}$ is the watermarked light field image.

Free-view Watermark Detection (FVWD):

In order to extract the watermark from a rendered view, the watermark detection scheme should involve an estimation procedure for the virtual camera position and orientation (via AVE), where the rendered view is generated. In addition, the watermark should also survive from image-based rendering operations, such as frame interpolation between neighbor cameras and pixel interpolation inside each camera frame.

In the invention, a correlation-based scheme is used for watermark detection. Rather than dealing with the general attacks for image and video watermarking, the critical problem of multi-view video, extraction of the watermark from an arbitrary view generated by LFR, is considered. Assuming that the position and rotation for the virtual camera are determined by AVE, the first step in the watermark detection is applying the same rendering operations during the generation of the arbitrary view to the watermark pattern, W, in order to generate the rendered watermark, $W_{ren}$. The arbitrary view is filtered by a high pass filter and normalized correlation between the resulting image and rendered watermark is calculated. Then, normalized correlation is compared to a threshold to detect the watermark. Overall structure of the watermark detection is shown in Figure 4.

Arbitrary View Extraction (AVE):

The proposed solutions for the detection of position and orientation of the virtual camera are explained below. Since the distortions in the virtual camera position and rotation significantly degrade the detection performance, the relation between the embedded and rendered watermarks is analyzed separately for two main interpolation methods in LFR, namely, nearest neighborhood and bilinear interpolation.

AVE for Nearest Neighborhood Interpolation in LFR

During the analysis for nearest neighbor interpolation, for determining the virtual camera position and orientation, the problem can be examined in three cases:

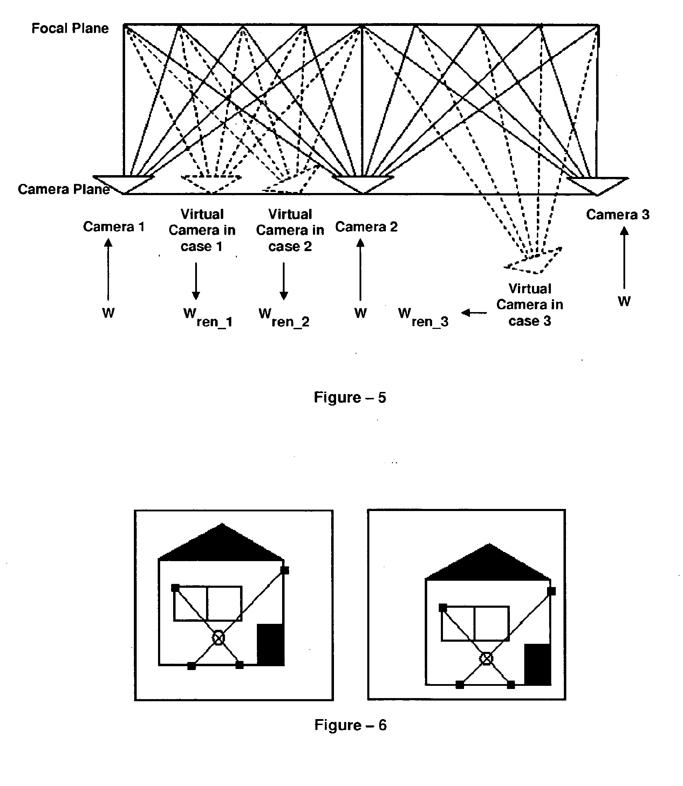

Case 1: The virtual camera is located on the camera plane and its rotation matrix is equal to a unit matrix, as in Figure 5. The same watermark, W, is embedded to the off-sheared images of Cameras 1 and 2. From the analysis of the operations in LFR, the watermark corresponding to the virtual camera, $W_{ren\_1}$, is a shifted version of W.

Case 2: The virtual camera is again located on the camera plane and its rotation is arbitrary, as in Figure 5. For this case, the relation between $W_{ren\_2}$ and W is a planar projective transformation (homography). This is one of the most common cases during rendering.

Case 3: The virtual camera is located in an arbitrary position and its rotation is also arbitrary, as in Figure 5. The relation between $W_{ren\_3}$ and W is still a planar projective transformation. However, there will be a scaling between the watermarks, which makes the watermark detection more difficult.

In order to solve the problem for Case-1, the correlation is computed for the possible shifts of the watermark pattern in the FVWD. The computation of this operation is decreased by utilizing a Fast Fourier Transform (FFT) and its inverse (IDFT). Specifically, symmetrical phase only matched filtering (SPOMF) is used for correlation computations. The position of the virtual camera is changed from the original case and the normalized correlation is computed for this shifted camera position.

In order to solve the problem for Case-2, it should be noted that the rendered image is generated from the image corresponding to the nearest neighbor camera. The relation between the rendered and the nearest neighbour original image can be approximated as a planar projective transformation. Therefore, according to the fundamental theorems of projective geometry, the intersection between crossing lines of any four points, as illustrated with crosses in figure 6, must be at the same location in original and rendered images, whereas the same crossing location should differ for other images.

For Case-2, this projective invariant property can be used to determine the original nearest neighbor image from which the rendered image is generated. The procedure to find the nearest neighbor original image can be stated as follows:

**1.** Find a number of feature points in the rendered image and original light field images. Match the feature points in the rendered image with the feature points in one of the original images.

**2.** Randomly select 4 matching points and find the intersection point of their crossing lines.

**3.** Find the mean square error ($MSE$) in $mxm$ ($m$ is a positive integer) window between the crossing point locations at two images. Slide the $mxm$ window in a $kxk$ ($k$ is a positive integer) search region at the original image around the intersection point of the rendered image and get the minimum mean square error, where $k$ is greater than $m$.

**4.** Repeat Steps 2 and 3 for a number of times and get the best percentage ($p$) results. Record the average of $MSE$.

**5.** The nearest neighbor image that results with the minimum average $MSE$ corresponds to the rendered image.

After determining the nearest neighbor original image, projective planar transform is estimated as a homography between the 3D points on the $st$-plane and the rendered image by using RANSAC algorithm. RANSAC is an algorithm utilized for fitting robust models to a data set in the presence of many data outliers. In this algorithm, initial models are obtained by using randomly selected data subset and then the percentage of data that fits the corresponding models within an error range is evaluated. If there is an improvement in the error, the model is accepted and updated through necessary number of iterations. At each iteration, new models are fit by randomly selected data subset and the outliers are detected. The iteration stops when the number of trials is equal to the necessary number of iterations. Finally, the final robust model is obtained with the majority of data that correctly fits the model, which gives the minimum error.

The resulting homography is applied to the embedded watermark pattern to obtain the required rendered watermark, $W_{ren\_2}$. Then, the SPOMF type of detection is utilized to extract the watermark from the rendered image.

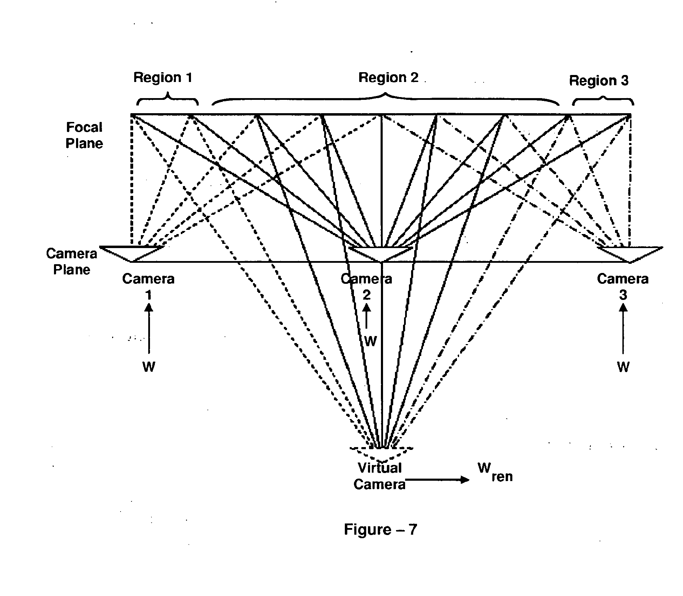

In order to solve the problem for Case-3, it should be noted that the rendered image is composed of different regions, for which the light fields for these regions are generated from a different light field image corresponding to a different camera. An illustration of this fact is given in Figure 7. In this example, the rendered image is formed of 3 regions and the light fields (pixels) for the 1st, 2nd and 3rd regions are generated from the light fields (pixels) of the 1st, 2nd and 3rd cameras, respectively. Similar to Case-2, the relation between each region of the rendered image and the corresponding light field image can also be approximated as a planar projective transformation (homography). However, the first problem to solve in Case-3 is determining the regions, rendered from different original views.

In the first step, the rendered image should be partitioned into some regions, according the original light field images from which the pixels in each region are generated. This partition process is explained in the next paragraph. After such a partitioning of the rendered image, the homographies between the regions of the rendered image and corresponding regions of the light field images are determined by similar methods, as in Case-2. Then, the estimated homography relations are applied to the corresponding regions in the original watermark, $W$, to generate the rendered watermark, $W_{ren\_3}$. Finally, the normalized correlation between the rendered watermark and the rendered image that has passed from high pass filtering is computed.

For Case-3, as mentioned in the previous paragraph, the partitions of the rendered image are determined automatically. For this purpose, an algorithm that exploits the features under projective planar transformation, as in Case-2, is developed. The algorithm first finds the matched feature points between each original image and the rendered image. Then, the algorithm, for finding the feature points due to different light field images, is as follows:

1. Find the correspondence points between the rendered image and each of the original light field images.

2. Determine the light field images that give the first N (N is a positive integer) highest number of feature point matches. (The number of matched feature points is higher for the original images used during rendering.)

3. For each feature point in the rendered image, form a group by selecting M (M is a positive integer) nearest feature points to that feature point.

4. Take 4 feature point pairs among the formed group and determine the intersection of line crossings. Compute the intensity difference between the pixel values at the intersections in the rendered image and original light field image.

5. Repeat the previous step for each of the different 4 pairs in this group. Determine the ratio of number of 4 pairs, which give zero difference in intensity at the cross-line intersections to the number of all 4 pair combinations in the group.

6. If the resulting ratio is larger than a predetermined threshold, then assign that feature point to the matched original light field image.

After determination of the original light field image of each feature point, the homographies between the rendered image and light field images are estimated by using these matched points. In order to assign each pixel on the image to a region, the determined homographies are applied to the pixel coordinates and the difference between the intensity values of the pixel and its corresponding match is calculated. The pixel is assigned to the original light field image, whose homography gives the minimum intensity difference.

AVE for Bilinear Interpolation in LFR

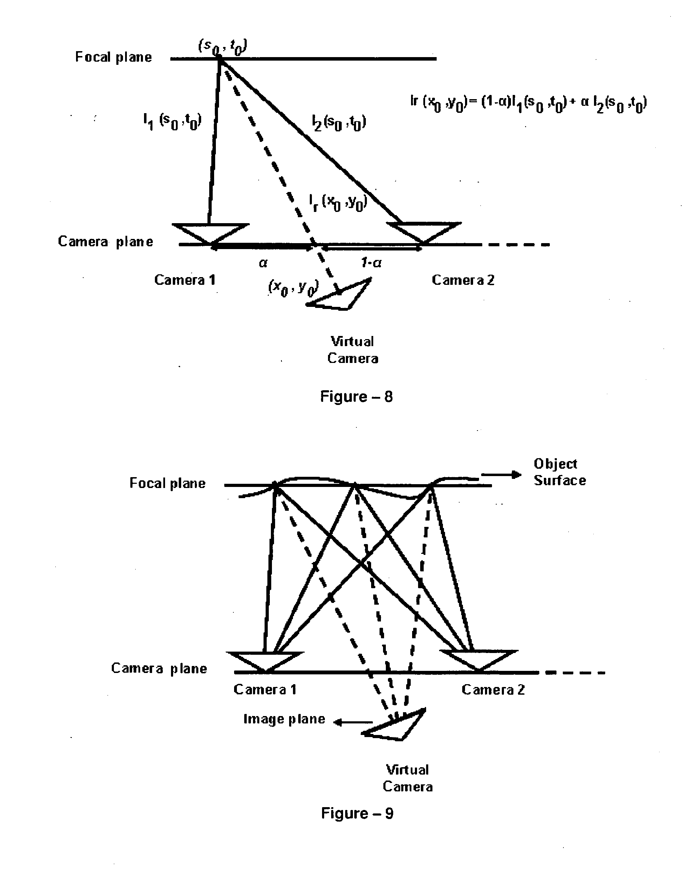

In the bilinear interpolation method for LFR, the intensity of each pixel of the rendered image is calculated as a weighted sum of the light rays, corresponding to the 4 nearest neighbor original images. The weights of the cameras are determined according to the distance of the camera centers from the intersection of the corresponding light ray of the rendered image with the camera plane (Figure 8). Since each pixel in the rendered image is obtained as a weighted sum of the pixels from different cameras, it is not possible to define the relation between the rendered image and the original light field images, as a projective planar transformation. Therefore, a different strategy should be followed for this case.

The proposed solution is based on the fact that the relation between the watermarks in the rendered image and the original images is equal to a projective planar transformation between the focal plane and the image plane of the virtual camera. This can be justified with the following equation:

$$I_r(x_o, y_o) \cong (1-\alpha)(I_1(s_o,t_o)+W(s_o,t_o))+\alpha(I_2(s_o,t_o)+W(s_o,t_o))$$
$$\Rightarrow \ I_r(x_o, y_o) \cong (1-\alpha)I_1(s_o,t_o)+\alpha I_2(s_o,t_o)+W(s_o,t_o) \tag{2}$$

In the equation, $W(s_o,t_o)$ refers to the watermark component embedded to each light ray passing through ($s_o$, $t_o$) which are intersection point, of light rays coming from two neighbor cameras, on focal plane; $I_1(s_o,t_o)$ and $I_2(s_o,t_o)$ are light rays between camera centers and said point ($s_o,t_o$); $I_r(x_0,y_0)$ is light ray between the position of virtual camera center at point ($x_0,y_0$) and said point ($s_o,t_o$); ($x_0,y_0$) is the intersection of the light ray $I_r(x_0,y_0)$ with the image plane of the virtual camera, $\alpha$ is the distance on camera plane between the first camera and intersection point of light ray $I_r(x_0,y_0)$ on camera plane, as shown in figure 8. While the rendered light ray is the weighted sum of different light rays of different cameras, the watermark component added to the light ray is not affected from bilinear interpolation due to two reasons. Firstly, the same watermark component is added to the pixels of different camera frames, whose corresponding light rays intersect at the same point in the focal plane (as shown in Figure 3). Secondly, the corresponding weights for the watermark component during bilinear interpolation sum up to one. Hence, the relation between watermarks is only related with ($s_o$, $t_o$) and ($x_o$, $y_o$) transformation, corresponding to the homography between two planes.

If the corresponding projective planar transformation between the focal plane and the image plane of the virtual camera is estimated, the watermark on the rendered image can be obtained by applying the same transformation to the original watermark pattern. For that aim, the object points that are located on the focal plane can be utilized (Figure 9). Note that, since the focal plane in light field parameterization is placed according to the mean distance of the object surface to the camera plane, there should always some points at the intersection of the object surface with the focal plane. In order to determine these points, two properties, resulted from light field parameterization, can be used. In the first property, all light rays of different light field images passing through these points have similar intensity information of the projected images. In addition, the coordinates of the pixels in each light field image corresponding to the light ray passing through these points should be close to each other. The algorithm to find the points on the focal plane belonging to the object surface can be stated as follows:

1. Find the matched feature points between the rendered image and each of the light field images.
2. Determine the light field images that give the first N (N is a positive integer) highest number of feature point matches.
3. Form a set of matched points for each of these light field images, {$S_1$... $S_N$}
4. Determine the common feature points on the rendered image which are the elements of each set, $S_i$.
5. From the common feature points, choose the ones whose matches in each corresponding light field image have the same pixel location and similar intensity values

After obtaining these points, the homography between the focal plane and image plane (Figure 9) can be estimated. The resulting transformation is applied to the original watermark, $W$, to compute the rendered watermark

*W$_{ren}$*. Then, the normalized correlation between the rendered watermark and the rendered image that has passed from high pass filtering is computed. Since there can be some small shifts in the calculation of *W$_{ren}$* due to the homography estimation, the normalized correlation is computed by using the magnitude coefficients of the 2-D Fourier transformation of the images, which are invariant to the translations in the pixel locations.

**Claims**

1.  A method for watermark detection in televisions, the method comprising;

    selecting view angles from the received visual content;
    creating a virtual view represented by a virtual camera generating an arbitrary view ($I_{ren}$) selected by the user, with respect to the physically available camera array that contains at least two cameras, by image based rendering; **characterized in that** it further comprises;

    - free view watermark embedding, which inserts the same watermark data into each multi-view video frame during the transmission of the multi-view video, in order to be extracted in the television receiver;
    - detecting the orientation and location of the virtual camera by using arbitrary view extraction that uses the generated image from the arbitrary view and multi-view video frames;
    - free view watermark detection utilizing image based rendering to determine a rendered watermark ($W_{ren}$) on the rendered image ($I_{ren}$), whose location and orientation is determined by said arbitrary view extraction, from the multi-view video containing watermarks; and correlating this rendered watermark ($W_{ren}$) with the rendered image ($I_{ren}$) to detect its existence.

2.  A method for watermark detection in televisions according to claim 1, wherein in free wiew watermark embedding, a watermark component (W) added to each image pixel is determined according to the intersection of a light ray corresponding to that pixel with a focal plane (s, t); and the same watermark component (W) is added to the pixels of different camera frames, whose corresponding light rays are intersected at the same point in the focal plane (s, t).

3.  A method for watermark detection in televisions according to claim 1, wherein in case of existence of watermark from image based rendering operations, for the determined position and orientation of virtual view via arbitrary view extraction, the free view watermark detection involves; firstly applying the same rendering operations during the generation of an arbitrary view ($I_{ren}$) to the watermark pattern, in order to generate the rendered watermark ($W_{ren}$); secondly filtering of the arbitrary view ($I_{ren}$) by a high pass filter; thirdly, calculation of normalized correlation between the resulting image ($\hat{I}_{ren}$) and rendered watermark ($W_{ren}$):

    finally, comparison of normalized correlation to a threshold to detect the watermark.

4.  A method for watermark detection in televisions according to claim 1, wherein in case of virtual camera being located on a camera plane (u, v) and its rotation matrix being equal to a unit matrix; to find the shifted camera position in arbitrary view extraction using nearest neighborhood interpolation in light field rendering,

    i. the same watermark (W) is embedded to the off-sheared images of two neighbor cameras;
    ii. the correlation is computed for the possible shifts of the watermark pattern in the free view watermark detection;
    iii. the computation of this operation is decreased by utilizing a fast Fourier transform and its inverse.
    iv. specifically, symmetrical phase only matched filtering is used for correlation computations..

5.  A method for watermark detection in televisions according to claim 1, wherein in case of virtual camera being located in the camera plane (u, v) and its rotation is arbitrary; to find the shifted camera position and orientation in arbitrary view extraction using nearest neighborhood interpolation in light field rendering,

    i. A number of feature points in the rendered and original images are determined, and the feature points in the rendered image ($I_{ren}$) and one of the original images are matched;
    ii. Four matching points are randomly selected and intersection point of their crossing lines is obtained;
    iii. the mean square error is calculated in (m X m) window between the crossing point locations at two images, and the (m X m) window is slid in a (k X k) search region at the original image around the intersection point of the rendered image ($I_{ren}$) and the minimum mean square error is calculated; where m and k are positive integers and k is greater than m;

iv. Steps "ii" and "iii" are repeated for a number of times and best percentage p results are selected and the average of mean square error is recorded.

v. the nearest neighbor image, which results with the minimum average mean square error, corresponds to the rendered image ($I_{ren}$);

vi. After determining the nearest neighbor original image, projective planar transform is estimated as a homography between the three dimensional points on the focal plane (s, t) and the rendered image ($I_{ren}$).

vii. The resulting homography is applied to the embedded watermark pattern to obtain the required rendered watermark ($W_{ren\_2}$).

**6.** A method for watermark detection in televisions according to claim 5, wherein symmetrical phase only matched filtering type of detection is utilized to extract the watermark from the rendered image ($I_{ren}$)

**7.** A method for watermark detection in televisions according to claims 1 and 5, wherein in case of the virtual camera is located in an arbitrary position and its rotation is also arbitrary; to find the camera position and orientation in arbitrary view extraction using nearest neighborhood interpolation in light field rendering,

i. In the first step, the rendered image ($I_{ren}$) is partitioned into some regions, according the original light field images from which the pixels in each region are generated.

ii. After such a partitioning of the rendered image ($I_{ren}$), the homographies between the regions of the rendered image ($I_{ren}$) and corresponding regions of the light field images are determined by the method as in claim 5,

iii. Then, the estimated homography relations are applied to the corresponding regions in the original watermark to generate the rendered watermark ($W_{ren\_3}$), and the normalized correlation between the rendered watermark ($W_{ren\_3}$) and the rendered image ($I_{ren}$) that has passed from high pass filtering is computed;

iv. After determination of the original light field image of each feature point, the homographies between the rendered image ($I_{ren}$) and light field images are estimated by using these matched points;

v. In order to assign each pixel on the image to a region, the determined homographies are applied to the pixel coordinates and the difference between the intensity values of the pixel and its corresponding match is calculated and the pixel is assigned to the original light field image, whose homography gives the minimum intensity difference.

**8.** A method for watermark detection in televisions according to claim 7, wherein to determine the partitions of the rendered image ($I_{ren}$), an algorithm first finds the matched feature points between each original image and the rendered image ($I_{ren}$), then the algorithm for finding the feature points due to different light field images is as follows:

i. Finding the correspondence points between the rendered image ($I_{ren}$) and each of the original light field images,

ii. Determining the light field images that give the first N highest number of feature point matches, where N is a positive integer;

iii. For each feature point in the rendered image ($I_{ren}$), forming a group by selecting M nearest feature points to that feature point, where M is a positive integer;

iv. Taking four feature point pairs among the formed group and determining the intersection of line crossings,

v. Computing the intensity difference between the pixel values at the intersections in the rendered image ($I_{ren}$) and original light field image,

vi. Repeating the previous step for each of the different four pairs in this group,

vii. Determining the ratio of number of four pairs, which give zero difference in intensity at the cross-line intersections to the number of all four pair combinations in the group,

viii. If the resulting ratio is larger than a predetermined threshold, then assigning that feature point to the matched original light field image,

**9.** A method for watermark detection in televisions according to claim 1, wherein in case of the virtual camera is located in an arbitrary position and its rotation is also arbitrary; to find the camera position and orientation in arbitrary view extraction using bilinear interpolation in light field rendering,

the solution is based on the fact that the relation between the watermarks in the rendered image ($I_{ren}$) and the original images is equal to a projective planar transformation between the focal plane (s, t) and the image plane of the virtual camera and this can be justified with the following equation:

$$I_r(x_o, y_o) \cong (1-\alpha)I_1(s_o, t_o) + \alpha I_2(s_o, t_o) + W(s_o, t_o)$$

where $W(s_o,t_o)$ refers to the watermark component (W) embedded to each light ray passing through $(s_o,t_o)$ which are intersection point, of light rays coming from two neighbor cameras, on focal plane (s, t); $I_1(s_o,t_o)$ and $I_2(s_o,t_o)$ are light rays between camera centers and said point $(s_o,t_o)$; $I_r(x_0,y_0)$ is light ray between the position of virtual camera center at point $(x_0,y_0)$ and said point $(s_o,t_o)$; $(x_0,y_0)$ is the intersection of the light ray $I_r(x_0,y_0)$ with the image plane of the virtual camera, $\alpha$ is the distance on camera plane (u, v) between the first camera and intersection point of light ray $I_r(x_0,y_0)$ on camera plane (u, v).

**10.** A method for watermark detection in televisions according to claim 9, wherein the same watermark component (W) is added to the pixels of different camera frames, whose corresponding light rays intersect at the same point in the focal plane (s, t); and the corresponding weights for the watermark component (W) during bilinear interpolation sum up to one; not to be affected the watermark component (W) added to the light ray from bilinear interpolation.

**11.** A method for watermark detection in televisions according to claims 9-10, wherein in case of estimated corresponding projective planar transformation between the focal plane (s, t) and the image plane of the virtual camera; the watermark on the rendered image $(I_{ren})$ is obtained by applying the same transformation to the original watermark pattern.

**12.** A method for watermark detection in televisions according to claim 11, wherein to apply the same transformation to the original watermark pattern, points at the intersection of the object surface with the focal plane (s, t) is utilized; and to determine these points,

   i. matched feature points between the rendered image $(I_{ren})$ and each of the light field images are obtained;
   ii. the light field images that give the first N highest number of feature point matches are determined; where N is a positive integer;
   iii. a set of matched points for each of these light field images are formed;
   iv. the common feature points on the rendered image $(I_{ren})$ which are the elements of each said set are determined;
   v. from the common feature points, the ones whose matches in each corresponding light field image having the same pixel location and similar intensity values, are chosen;
   provided that, all light rays of different light field images passing through these points have similar intensity information of the projected image; and the coordinates of the pixels in each light field image corresponding to the light ray passing through these points should be close to each other.

**13.** A method for watermark detection in televisions according to claim 12, wherein after obtaining the points at the intersection of the object surface with the focal plane (s, t), the homography between the focal plane (s, t) and image plane is estimated; the resulting transformation is applied to the original watermark to compute the rendered watermark $(W_{ren})$; then the normalized correlation between the rendered watermark $(W_{ren})$ and the rendered image $(I_{ren})$ that has passed from high pass filtering is computed.

**14.** A method for watermark detection in televisions according to claim 13, wherein the normalized correlation is computed by using the magnitude coefficients of the two dimensional Fourier transformation of the images, which are invariant to the translations in the pixel locations; due some small shifts in the calculation of rendered watermark $(W_{ren})$ from the homography estimation.

**Patentansprüche**

**1.** Verfahren zur Wasserzeichenerfassung in Fernsehausstrahlungen, wobei das Verfahren umfasst:

   Auswählen von Ansichtswinkeln aus dem empfangenen visuellen Inhalt;
   Erzeugen einer virtuellen Ansicht, die durch eine virtuelle Kamera dargestellt wird,
   die eine beliebige Ansicht $(I_{ren})$, die vom Benutzer ausgewählt wird, im Hinblick auf die real verfügbare Kameraanordnung, die mindestens zwei Kameras enthält,
   durch bildbasierte Wiedergabe generiert;
   **dadurch gekennzeichnet, dass** es darüber hinaus umfasst:

      - eine frei einsehbare Wasserzeicheneinbettung, die dieselben Wasserzeichendaten in jedes Mehrfachansicht-Videoeinzelbild während der Übertragung des Mehrfachansicht-Videos einsetzt, um im Fernsehempfänger extrahiert zu werden;

- Erfassen der Ausrichtung und örtlichen Lage der virtuellen Kamera unter Verwendung einer beliebigen Ansichtsextraktion, die das aus der beliebigen Ansicht und den Mehrfachansicht-Videoeinzelbildern generierte Bild verwendet;

- eine Erfassung eines frei einsehbaren Wasserzeichens, die bildbasierte Wiedergabe verwendet, um ein wiedergegebenes Wasserzeichen ($W_{ren}$) auf dem wiedergegebenen Bild ($I_{ren}$) zu bestimmen, dessen örtliche Lage und Ausrichtung durch die beliebige Bildextraktion aus dem Wasserzeichen enthaltenden Mehrfachansicht-Video bestimmt wird; und Korrelieren dieses wiedergegebenen Wasserzeichens ($W_{ren}$) mit dem wiedergegebenen Bild ($I_{ren}$), um sein Vorhandensein zu erfassen.

2. Verfahren nach Anspruch 1, zur Wasserzeichenerfassung in Fernsehausstrahlungen, wobei bei der frei einsehbaren Wasserzeicheneinbettung, eine Wasserzeichenkomponente (W), die jedem Bildpixel hinzugefügt ist, entsprechend dem Schnittpunkt eines diesem Pixel entsprechenden Lichtstrahls mit einer Brennebene (s, t) bestimmt wird; und dieselbe Wasserzeichenkomponente (W) zu den Pixeln anderer Kamerabilder hinzugefügt wird, deren entsprechende Lichtstrahlen sich am selben Punkt in der Brennebene (s, t) schneiden.

3. Verfahren nach Anspruch 1, zur Wasserzeichenerfassung in Fernsehausstrahlungen, wobei im Falle des Vorhandenseins eines Wasserzeichens aus bildbasierten Wiedergabevorgängen die Erfassung eines frei einsehbaren Wasserzeichens, was die bestimmte Position und Ausrichtung der virtuellen Ansicht über die beliebige Ansichtsextraktion betrifft, umfasst: zuerst dieselben Wiedergabevorgänge während des Generierens einer beliebigen Ansicht ($I_{ren}$) auf das Wasserzeichenmuster anzuwenden, um das wiedergegebene Wasserzeichen ($W_{ren}$) zu generieren; zweitens die beliebige Ansicht ($I_{ren}$) durch ein Hochpassfilter zu filtern; drittens die normalisierte Korrelation zwischen dem sich ergebenden Bild ($I_{ren}$) und dem wiedergegebenen Wasserzeichen ($W_{ren}$) zu berechnen; und schließlich die normalisierte Korrelation mit einem Schwellenwert zur Erfassung des Wasserzeichens zu vergleichen.

4. Verfahren nach Anspruch 1, zur Wasserzeichenerfassung in Fernsehausstrahlungen, wobei im Falle, dass die virtuelle Kamera sich in einer Kameraebene (u, v) befindet und ihre Drehungsmatrix gleich einer Einheitsmatrix ist, um die verschobene Kameraposition bei der beliebigen Ansichtsextraktion unter Verwendung einer Interpolation der nächsten Nachbarschaft in der Lichtfeldwiedergabe zu finden

i. dasselbe Wasserzeichen (W) in die abgetrennten Bilder zweier Nachbarkameras eingebettet wird;

ii. die Korrelation für die möglichen Verschiebungen des Wasserzeichenmusters bei der Erfassung eines frei einsehbaren Wasserzeichens berechnet wird;

iii. die Berechnung dieses Vorgangs abgekürzt wird, indem eine schnelle Fourier-Transformation und ihre Umkehrung verwendet wird,

iv. speziell eine nur an die symmetrische Phase angepasste Filterung für die Korrelationsberechnungen verwendet wird.

5. Verfahren nach Anspruch 1, zur Wasserzeichenerfassung in Fernsehausstrahlungen, wobei im Falle, dass sich eine virtuelle Kamera in der Kameraebene (u, v) befindet und ihre Drehung beliebig ist, um die verschobene Kameraposition und -ausrichtung bei der beliebigen Ansichtsextraktion unter Verwendung einer Interpolation der nächsten Nachbarschaft in der Lichtfeldwiedergabe zu finden

i) mehrere Merkmalspunkte in den wiedergegebenen und Originalbildern bestimmt werden, und die Merkmalspunkte in dem wiedergegebenen Bild ($I_{ren}$) und einem der Originalbilder abgeglichen werden;

ii) vier übereinstimmende Punkte zufällig ausgewählt werden und der Schnittpunkt ihrer Kreuzungslinien ermittelt wird;

iii) der mittlere quadratische Fehler im (m X m) Fenster zwischen den Kreuzungspunktstellen bei zwei Bildern berechnet wird, und das (m X m) Fenster in einem (k X k) Suchbereich beim Originalbild um den Schnittpunkt des wiedergegebenen Bilds ($I_{ren}$) herum verschoben und der kleinste mittlere quadratische Fehler berechnet wird, wobei m und k positive ganze Zahlen sind und k größer als m ist;

iv) die Schritte "ii" und "iii" mehrmals wiederholt und die besten Ergebnisse in Prozent p ausgewählt werden, und der Mittelwert des mittleren quadratischen Fehlers aufgezeichnet wird;

v) das nächste Nachbarbild, das sich mit dem kleinsten durchschnittlichen mittleren quadratischen Fehler ergibt, dem wiedergegebenen Bild ($I_{ren}$) entspricht;

vi) nach dem Bestimmen des nächsten Nachbaroriginalbilds eine projektive Flächentransformation als Projektivität zwischen den dreidimensionalen Punkten auf der Brennebene (s, t) und dem wiedergegebenen Bild ($I_{ren}$) geschätzt wird;

vii) die sich ergebende Projektivität auf das eingebettete Wasserzeichenmuster angewendet wird, um das erforderliche wiedergegebene Wasserzeichen ($W_{ren\_2}$) zu erhalten.

**6.** Verfahren nach Anspruch 5, zur Wasserzeichenerfassung in Fernsehausstrahlungen, wobei eine Erfassungsart der nur an die symmetrische Phase angepassten Filterung verwendet wird, um das Wasserzeichen aus dem wiedergegebenen Bild ($I_{ren}$) zu extrahieren.

**7.** Verfahren nach Anspruch 1 und 5, zur Wasserzeichenerfassung in Fernsehausstrahlungen, wobei im Falle, dass sich die virtuelle Kamera in einer beliebigen Position befindet und ihre Drehung auch beliebig ist, um die Kameraposition und -ausrichtung in der beliebigen Ansichtsextraktion unter Verwendung einer Interpolation der nächsten Nachbarschaft in der Lichtfeldwiedergabe zu finden

    i. im ersten Schritt das wiedergegebene Bild ($I_{ren}$) in einige Bereiche entsprechend den ursprünglichen Lichtfeldbildern, aus denen die Pixel in jedem Bereich generiert werden, aufgeteilt wird;
    ii. nach einer derartigen Aufteilung des wiedergegebenen Bilds ($I_{ren}$) die Projektivitäten zwischen den Bereichen des wiedergegebenen Bilds ($I_{ren}$) und entsprechenden Bereichen der Lichtfeldbilder durch das Verfahren wie in Anspruch 5 bestimmt werden;
    iii. dann die geschätzten Projektivitätsbeziehungen auf die entsprechenden Bereiche im ursprünglichen Wasserzeichen angewendet werden, um das wiedergegebene Wasserzeichen ($W_{ren\_3}$) zu generieren, und die normalisierte Korrelation zwischen dem wiedergegebenen Wasserzeichen ($W_{ren\_3}$) und dem wiedergegebenen Bild ($I_{ren}$) berechnet wird, das aus der Hochpassfilterung weitergegeben wurde,;
    iv. nach der Bestimmung des ursprünglichen Lichtfeldbilds jedes Merkmalspunkts die Projektivitäten zwischen dem wiedergegebenen Bild ($I_{ren}$) und Lichtfeldbildern unter Verwendung dieser übereinstimmenden Punkte geschätzt werden;
    v. um jedes Pixel auf dem Bild einem Bereich zuzuordnen, die bestimmten Projektivitäten auf die Pixelkoordinaten angewendet werden, und die Differenz zwischen den Intensitätswerten des Pixels und seiner entsprechenden Übereinstimmung berechnet und das Pixel dem ursprünglichen Lichtfeldbild zugeordnet wird, dessen Projektivität die kleinste Intensitätsdifferenz ergibt.

**8.** Verfahren nach Anspruch 7, zur Wasserzeichenerfassung in Fernsehausstrahlungen, wobei, um die Aufteilungen des wiedergegebenen Bilds ($I_{ren}$) zu bestimmen, ein Algorithmus zuerst die abgeglichenen Merkmalspunkte zwischen jedem Originalbild und dem wiedergegebenen Bild ($I_{ren}$) auffindet, und dann der Algorithmus zum Auffinden der Merkmalspunkte aufgrund unterschiedlicher Lichtfeldbilder wie folgt vonstatten geht:

    i. Auffinden der Übereinstimmungspunkte zwischen dem wiedergegebenen Bild ($I_{ren}$) und jedem der ursprünglichen Lichtfeldbilder;
    ii. Bestimmen der Lichtfeldbilder, die die erste höchste Anzahl N von Merkmalspunktübereinstimmungen ergeben, wobei N eine positive ganze Zahl ist;
    iii. Bilden einer Gruppe für jeden Merkmalspunkt in dem wiedergegebenen Bild ($I_{ren}$), indem M diesem Merkmalspunkt am nächsten liegende Merkmalspunkte ausgewählt werden, wobei M eine positive ganze Zahl ist;
    iv. Nehmen von vier Merkmalspunktpaaren aus der gebildeten Gruppe und Bestimmen des Schnittpunkts von Linienkreuzungen;
    v. Berechnen der Intensitätsdifferenz zwischen den Pixelwerten an den Schnittpunkten in dem wiedergegebenen Bild ($I_{ren}$) und dem ursprünglichen Lichtfeldbild;
    vi. Wiederholen des vorigen Schritts für jedes der verschiedenen vier Paare in dieser Gruppe;
    vii. Bestimmen des Verhältnisses der Anzahl von vier Paaren, die eine Nulldifferenz in der Intensität an den Kreuzungslinienschnittpunkten ergeben, zur Anzahl aller vier Paarkombinationen in der Gruppe;
    viii. wenn das sich ergebende Verhältnis größer ist als ein vorbestimmter Schwellenwert, dann Zuordnen dieses Merkmalspunkts zu dem abgeglichenen ursprünglichen Lichtfeldbild.

**9.** Verfahren nach Anspruch 1, zur Wasserzeichenerfassung in Fernsehausstrahlungen, wobei im Falle, dass sich die virtuelle Kamera in einer beliebigen Position befindet und ihre Drehung auch beliebig ist, um die Kameraposition und -ausrichtung in der beliebigen Ansichtsextraktion unter Verwendung einer bilinearen Interpolation in der Lichtfeldwiedergabe zu finden, die Lösung auf der Tatsache beruht, dass das Verhältnis zwischen den Wasserzeichen in dem wiedergegebenen Bild ($I_{ren}$) und den Originalbildern gleich einer projektiven Flächentransformation zwischen der Brennebene (s, t) und der Bildebene der virtuellen Kamera ist und dies mit der folgenden Gleichung begründet werden kann:

$$I_r(x_0, y_0) \cong (1 - \alpha) I_1(s_0, t_0) + \alpha I_2(s_0, t_0) + W(s_0, t_0)$$

worin sich $W(s_0, t_0)$ auf die Wasserzeichenkomponente (W) bezieht, die in jeden Lichtstrahl eingebettet wird, der durch $(s_0, t_0)$ hindurchläuft, bei dem es sich um einen Schnittpunkt von aus zwei Nachbarkameras kommenden Lichtstrahlen auf der Brennebene (s, t) handelt; $I_1(s_0, t_0)$ und $I_2(s_0, t_0)$ Lichtstrahlen zwischen Kameramitten und dem Punkt $(s_0, t_0)$ sind; $I_r(x_0, y_0)$ ein Lichtstrahl zwischen der Position der Mitte der virtuellen Kamera am Punkt $(x_0, y_0)$ und dem Punkt $(s_0, t_0)$ ist; $(x_0, y_0)$ der Schnittpunkt des Lichtstrahls $I_r(x_0, y_0)$ mit der Bildebene der virtuellen Kamera ist, und $\alpha$ der Abstand auf der Kameraebene (u, v) zwischen der ersten Kamera und dem Schnittpunkt des Lichtstrahls $I_r(x_0, y_0)$ auf der Kameraebene (u, v) ist.

**10.** Verfahren nach Anspruch 9, zur Wasserzeichenerfassung in Fernsehausstrahlungen, wobei dieselbe Wasserzeichenkomponente (W) den Pixeln verschiedener Kamerabilder hinzugefügt wird, deren entsprechende Lichtstrahlen sich am selben Punkt in der Brennebene (s, t) schneiden; und sich die entsprechenden Gewichtungen für die Wasserzeichenkomponente (W) während der bilinearen Interpolation auf Eins summieren; unbeeinflusst von der dem Lichtstrahl aus der bilinearen Interpolation hinzugefügten Wasserzeichenkomponente (W).

**11.** Verfahren nach den Ansprüchen 9 - 10, zur Wasserzeichenerfassung in Fernsehausstrahlungen, wobei im Falle einer geschätzten entsprechenden projektiven Flächentransformation zwischen der Brennebene (s, t) und der Bildebene der virtuellen Kamera das Wasserzeichen auf dem wiedergegebenen Bild ($I_{ren}$) erhalten wird, indem dieselbe Transformation auf das ursprüngliche Wasserzeichenmuster angewendet wird.

**12.** Verfahren nach Anspruch 11, zur Wasserzeichenerfassung in Fernsehausstrahlungen, wobei, um dieselbe Transformation auf das ursprüngliche Wasserzeichenmuster anzuwenden, Punkte am Schnittpunkt der Objektoberfläche mit der Brennebene (s, t) verwendet werden, und um diese Punkte zu bestimmen,

i. abgeglichene Merkmalspunkte zwischen dem wiedergegebenen Bild ($I_{ren}$) und jedem der Lichtfeldbilder ermittelt werden;
ii. die Lichtfeldbilder bestimmt werden, die die erste höchste Anzahl N von Merkmalspunktübereinstimmungen ergeben, wobei N eine positive ganze Zahl ist;
iii. eine Gruppe von Übereinstimmungspunkten für jedes dieser Lichtfeldbilder gebildet wird;
iv. die gemeinsamen Merkmalspunkte auf dem wiedergegebenen Bild ($I_{ren}$) bestimmt werden, bei denen es sich um die Elemente einer jeden solchen Gruppe handelt;
v. aus den gemeinsamen Merkmalspunkten diejenigen ausgesucht werden, deren Übereinstimmungen in jedem entsprechenden Lichtfeldbild dieselbe Pixelstelle und ähnliche Intensitätswerte haben;
vorausgesetzt, dass alle Lichtstrahlen verschiedener Lichtfeldbilder, die diese Punkte durchlaufen, eine ähnliche Intensitätsinformation des projizierten Bilds haben; und die Koordinaten der Pixel in jedem Lichtfeldbild, das dem diese Punkte durchlaufenden Lichtstrahl entspricht, nahe beieinander sein sollten.

**13.** Verfahren nach Anspruch 12, zur Wasserzeichenerfassung in Fernsehausstrahlungen, wobei, nachdem die Punkte am Schnittpunkt der Objektoberfläche mit der Brennebene (s, t) ermittelt wurden, die Projektivität zwischen der Brennebene (s, t) und der Bildebene geschätzt wird; die sich ergebende Transformation auf das ursprüngliche Wasserzeichen angewendet wird, um das wiedergegebene Wasserzeichen ($W_{ren}$) zu berechnen; und dann die normalisierte Korrelation zwischen dem wiedergegebenen Wasserzeichen ($W_{ren}$) und dem wiedergegebenen Bild ($I_{ren}$) berechnet wird, das aus der Hochpassfilterung weitergegeben wurde.

**14.** Verfahren nach Anspruch 13, zur Wasserzeichenerfassung in Fernsehausstrahlungen, wobei die normalisierte Korrelation unter Verwendung der Größenkoeffizienten der zweidimensionalen Fourier-Transformation der Bilder berechnet wird, die gegenüber Verschiebungen der Pixelstellen invariant sind, die von geringen Verschiebungen in der Berechnung des wiedergegebenen Wasserzeichens ($W_{ren}$) aus der Projektivitätsschätzung herrühren.

**Revendications**

**1.** Procédé de détection de filigrane dans des téléviseurs, le procédé consistant à :

choisir des angles de vue à partir du contenu visuel reçu ;

créer une vue virtuelle représentée par une caméra virtuelle générant une vue arbitraire ($I_{ren}$) choisie par l'utilisateur, par rapport au réseau de caméras physiquement disponibles qui contient au moins deux caméras, par rendu basé sur l'image ;

**caractérisé en ce qu'**il comprend en outre :

- l'incorporation d'un filigrane à vue libre, qui introduit les mêmes données de filigrane dans chaque image vidéo multivues lors de la transmission de la vidéo multivues, afin qu'il soit extrait dans le récepteur de télévision ;
- la détection de l'orientation et de la localisation de la caméra virtuelle en utilisant l'extraction de vue arbitraire qui utilise l'image générée issue de la vue arbitraire et des images vidéo multivues ;
- la détection du filigrane à vue libre utilisant le rendu basé sur l'image pour déterminer un filigrane rendu ($W_{ren}$) sur l'image rendue ($I_{ren}$), dont la localisation et l'orientation sont déterminées par ladite extraction de vue arbitraire, à partir de la vidéo multivues contenant les filigranes ; et la mise en corrélation de ce filigrane rendu ($W_{ren}$) avec l'image rendue ($I_{ren}$) pour détecter son existence.

2. Procédé de détection de filigrane dans des téléviseurs selon la revendication 1, dans lequel dans l'incorporation de filigrane à vue libre, une composante de filigrane ($W$) ajoutée à chaque pixel d'image est déterminée selon l'intersection d'un rayon lumineux correspondant à ce pixel avec un plan focal ($s$, $t$) ; et la même composante de filigrane ($W$) est ajoutée aux pixels d'images de caméras différentes, dont les rayons lumineux concordants se coupent au niveau du même point dans le plan focal ($s$, $t$).

3. Procédé de détection de filigrane dans des téléviseurs selon la revendication 1, dans lequel en cas d'existence d'un filigrane issu d'opérations de rendu basé sur l'image, pour la position et l'orientation déterminées de la vue virtuelle par le biais de l'extraction de vue arbitraire, la détection du filigrane à vue libre implique : premièrement, l'application des mêmes opérations de rendu lors de la génération d'une vue arbitraire ($I_{ren}$) sur le motif de filigrane, afin de générer le filigrane rendu ($W_{ren}$) ; deuxièmement, le filtrage de la vue arbitraire ($I_{ren}$) grâce à un filtre passe haut ; troisièmement, le calcul de la corrélation normalisée entre l'image résultante ($I_{ren}$) et le filigrane rendu ($W_{ren}$) ; pour finir, la comparaison de la corrélation normalisée à un seuil pour détecter le filigrane.

4. Procédé de détection de filigrane dans des téléviseurs selon la revendication 1, dans lequel où la caméra visuelle se trouve sur un plan de caméra ($u$, $v$) et où sa matrice de rotation est égale à une matrice unitaire, pour trouver la position de la caméra déplacée dans l'extraction de la vue arbitraire au moyen de l'interpolation de voisinage le plus proche dans le rendu de champ lumineux,

i. le même filigrane ($W$) est incorporé aux images cisaillées des deux caméras voisines ;
ii. la corrélation est calculée pour les décalages possibles du motif de filigrane dans la détection du filigrane à vue libre ;
iii. le calcul de cette opération est diminué en utilisant une transformée de Fourier rapide et son inverse.
iv. En particulier, le filtrage correspondant à la seule phase symétrique est utilisé pour les calculs de corrélation.

5. Procédé de détection de filigrane dans des téléviseurs selon la revendication 1, dans lequel dans le cas où la caméra virtuelle se trouve dans le plan de la caméra ($u$, $v$) et où sa rotation est arbitraire, pour trouver la position et l'orientation de la caméra déplacée dans l'extraction de vue arbitraire au moyen de l'interpolation de voisinage le plus proche dans le rendu de champ lumineux,

i. un nombre de points caractéristiques des images rendue et d'origine sont déterminés et les points caractéristiques de l'image rendue ($I_{ren}$) et d'une des images d'origine correspondent ;
ii. quatre points de correspondance sont choisis aléatoirement et le point d'intersection de leurs lignes d'intersection est obtenu ;
iii. l'erreur quadratique moyenne est calculée dans la fenêtre ($m$ X $m$) entre les localisations de points d'intersection au niveau de deux images, et la fenêtre ($m$ X $m$) est glissée dans une région de recherche ($k$ X $k$) sur l'image d'origine autour du point d'intersection de l'image rendue ($I_{ren}$) et l'erreur quadratique moyenne minimale est calculée ; où $m$ et $k$ sont des nombres entiers positifs et $k$ est supérieur à $m$ ;
iv. les étapes "ii" et "iii" sont répétées un certain nombre de fois et les résultats les meilleurs en pourcentage $p$ sont choisis et la moyenne de l'erreur quadratique moyenne est enregistrée.
v. l'image voisine la plus proche, qui résulte de l'erreur quadratique moyenne minimale, correspond à l'image rendue ($I_{ren}$) ;
vi. après avoir déterminé l'image d'origine voisine la plus proche, la transformée planaire projective est estimée en tant qu'homographie entre les points tridimensionnels sur le plan focal (s, t) et l'image rendue ($I_{ren}$).

vii. L'homographie résultante est appliquée au motif de filigrane incorporé pour obtenir le filigrane rendu voulu ($W_{ren\_2}$).

**6.** Procédé de détection de filigrane dans des téléviseurs selon la revendication 5, dans lequel le type de détection par filtrage correspondant à la seule phase symétrique est utilisé pour extraire le filigrane à partir de l'image rendue ($I_{ren}$).

**7.** Procédé de détection de filigrane dans des téléviseurs selon les revendications 1 et 5, dans lequel dans le cas où la caméra virtuelle se trouve dans une position arbitraire et où sa rotation est également arbitraire, pour trouver la position et l'orientation de la caméra dans l'extraction de vue arbitraire au moyen de l'interpolation de voisinage le plus proche dans le rendu de champ lumineux,

i. dans la première étape, l'image rendue ($I_{ren}$) est divisée en un certain nombre de régions, conformément aux images de champ lumineux d'origine à partir desquelles les pixels dans chaque région sont générés ;

ii. après une telle division de l'image rendue ($I_{ren}$), les homographies entre les régions de l'image rendue ($I_{ren}$) et les régions concordantes des images de champ lumineux sont déterminées grâce au procédé selon la revendication 5 ;

iii. puis, les relations d'homographie estimées sont appliquées aux régions concordantes dans le filigrane d'origine pour générer le filigrane rendu ($W_{ren\_3}$) et la corrélation normalisée entre le filigrane rendu ($W_{ren\_3}$) et l'image rendue ($I_{ren}$) qui est passée par le filtrage passe haut est calculée ;

iv. après détermination de l'image de champ lumineux d'origine de chaque point caractéristique, les homographies entre l'image rendue ($I_{ren}$) et les images de champ lumineux sont estimées en utilisant ces points concordants ;

v. afin d'attribuer chaque pixel sur l'image à une région, les homographies déterminées sont appliquées aux coordonnées de pixels et la différence entre les valeurs d'intensité du pixel et sa concordance concordante est calculée et le pixel est attribué à l'image de champ lumineux d'origine, dont l'homographie donne la différence d'intensité minimale.

**8.** Procédé de détection de filigrane dans des téléviseurs selon la revendication 7, dans lequel pour déterminer les divisions de l'image rendue ($I_{ren}$), un algorithme trouve d'abord les points caractéristiques concordants entre chaque image d'origine et l'image rendue ($I_{ren}$), puis l'algorithme pour trouver les points caractéristiques dus aux différentes images de champ lumineux, le procédé consistant à :

i. trouver les points de correspondance entre l'image rendue ($I_{ren}$) et chacune des images de champ lumineux d'origine,

ii. déterminer les images de champ lumineux qui donnent le premier nombre N le plus élevé des concordances de points caractéristiques, où N est un nombre entier positif ;

iii. pour chaque point caractéristique dans l'image rendue ($I_{ren}$), former un groupe en choisissant M points caractéristiques les plus proches de ce point caractéristique, où M est un nombre entier positif ;

iv. prendre quatre paires de points caractéristiques dans le groupe formé et déterminer l'intersection des croisements de lignes,

v. calculer la différence d'intensité entre les valeurs de pixel au niveau des intersections dans l'image rendue ($I_{ren}$) et l'image de champ lumineux d'origine,

vi. répéter l'étape précédente pour chacune des quatre paires différentes de ce groupe,

vii. déterminer le rapport du nombre de quatre paires, qui donne une différence zéro d'intensité au niveau des intersections de lignes perpendiculaires sur le nombre de l'ensemble des combinaisons des quatre paires du groupe,

viii. si le rapport résultant est supérieur à un seuil prédéterminé, attribuer ensuite ce point caractéristique à l'image de champ lumineux d'origine concordante.

**9.** Procédé de détection de filigrane dans des téléviseurs selon la revendication 1, dans lequel dans le cas où la caméra virtuelle se trouve dans une position arbitraire et où sa rotation est également arbitraire, pour trouver la position et l'orientation de la caméra dans l'extraction de vue arbitraire au moyen de l'interpolation bilinéaire du rendu de champ lumineux,

la solution est basée sur le fait que la relation entre les filigranes dans l'image rendue ($I_{ren}$) et les images d'origine est égale à une transformation planaire projective entre le plan focal (s, t) et le plan image de la caméra virtuelle et cela peut se justifier par l'équation suivante :

$$I_r(x_o, y_o) \cong (1 - \alpha) \, I_1(S_o, t_o) + \alpha \, I_2(S_o, t_o) + W(S_o, t_o)$$

où $W(S_o, t_o)$ désigne la composante de filigrane (W) incorporée à chaque rayon lumineux passant par $(S_o, t_o)$ qui sont les points d'intersection, des rayons lumineux provenant de deux caméras voisines, sur le plan focal (s, t) ; $I_1(S_o, t_o)$ et $I_2(S_o, t_o)$ sont les rayons lumineux entre les centres des caméras et ledit point $(S_o, t_o)$ ; $I_r(X_o, Y_o)$ est le rayon lumineux entre la position du centre de la caméra virtuelle au point $(X_o, Y_o)$ et ledit point $(S_o, t_o)$ ; $(X_o, Y_o)$ est l'intersection du rayon lumineux $I_r(X_o, Y_o)$ avec le plan image de la caméra virtuelle, $\alpha$ est la distance sur le plan caméra (u, v) entre la première caméra et le point d'intersection du rayon lumineux $I_r(X_o, Y_o)$ sur le plan caméra (u, v).

**10.** Procédé de détection de filigrane dans des téléviseurs selon la revendication 9, dans lequel la même composante de filigrane (W) est ajoutée aux pixels des différentes images de caméra, dont les rayons lumineux correspondants se croisent au même point dans le plan focal (s, t) ; et les poids correspondants pour la composante de filigrane (W) lors de l'interpolation bilinéaire s'ajoutent à un ; pour ne pas être affecté la composante de filigrane (W) est ajoutée au rayon lumineux par interpolation bilinéaire.

**11.** Procédé de détection de filigrane dans des téléviseurs selon les revendications 9 et 10, dans lequel dans le cas de la transformation planaire projective correspondante estimée entre le plan focal (s, t) et le plan image de la caméra virtuelle, le filigrane sur l'image rendue ($I_{ren}$) est obtenu en appliquant la même transformation au motif de filigrane d'origine.

**12.** Procédé de détection de filigrane dans des téléviseurs selon la revendication 11, dans lequel, pour appliquer la même transformation au motif de filigrane d'origine, les points au niveau de l'intersection de la surface de l'objet avec le plan focal (s, t) sont utilisés ; et pour déterminer ces points,

i. les points caractéristiques concordants entre l'image rendue ($I_{ren}$) et chacune des images de champ lumineux sont obtenus ;
ii. les images de champ lumineux qui donnent le premier nombre N le plus élevé des concordances de points caractéristiques sont déterminées ; où N est un nombre entier positif ;
iii. un ensemble de points concordants est formé pour chacune de ces images de champ lumineux ;
iv. les points caractéristiques communs sur l'image rendue ($I_{ren}$) qui sont les éléments de chacun desdits ensembles sont déterminés ;
v. à partir des points caractéristiques communs, ceux dont les concordances dans chaque image de champ lumineux correspondant ont le même emplacement de pixel et des valeurs d'intensité similaires, sont choisis ; étant donné que tous les rayons lumineux des différentes images de champ lumineux passant par ces points ont des informations d'intensité similaires de l'image projetée ; et les coordonnées des pixels de chaque image de champ lumineux correspondant au rayon lumineux passant par ces points devraient être proches les unes des autres.

**13.** Procédé de détection de filigrane dans des téléviseurs selon la revendication 12, dans lequel après obtention des points à l'intersection de la surface de l'objet avec le plan focal (s, t), l'homographie entre le plan focal (s, t) et le plan image est estimée ; la transformation résultante est appliquée au filigrane d'origine pour calculer le filigrane rendu ($W_{ren}$) ; et ensuite, la corrélation normalisée entre le filigrane rendu ($W_{ren}$) et l'image rendue ($I_{ren}$) qui est passée par le filtrage passe haut est calculée.

**14.** Procédé de détection de filigrane dans des téléviseurs selon la revendication 13, dans lequel la corrélation normalisée est calculée en utilisant les coefficients de grandeur de la transformation de Fourier bidimensionnelle des images, qui sont invariants aux translations des emplacements de pixel ; en raison de petits décalages dans le calcul du filigrane rendu ($W_{ren}$) à partir de l'estimation d'homographie.

Multi-view video (MVV)

Watermark → Free-view Watermark Embedder (FVWE)

Watermarked Multi-view video

MULTI-VIEW VIDEO ENCODER & TRANSMITTER

Watermarked Multi-view video

TRANSMISSION CHANNEL

MULTI-VIEW VIDEO DECODER & RECEIVER

User Interaction and preference for arbitrary view generation → Arbitrary view Generator (AVG)

Arbitrary Rendered View

Arbitrary view Extractor (AVE) — Virtual Camera Location → Arbitrary view Generator (AVG) ← Watermark

Arbitrary Rendered View

Free-view Watermark Detector (FVWD) ← Rendered Watermark

Watermark Detection Result

Figure – 1

Figure – 2

Figure – 3

$$\frac{< \hat{I}_{ren}, W_{ren} >}{|\hat{I}_{ren}|\, |W_{ren}|}$$

Figure – 4

Figure – 5

Figure – 6

Figure – 7

Focal plane $(s_0, t_0)$

$I_1 (s_0, t_0)$

$I_2 (s_0, t_0)$

$Ir (x_0, y_0) = (1-\alpha)I_1(s_0, t_0) + \alpha I_2(s_0, t_0)$

$I_r (x_0, y_0)$

Camera plane

$\alpha$     $1-\alpha$

Camera 1     $(x_0, y_0)$     Camera 2

Virtual
Camera

Figure – 8

Object
Surface

Focal plane

Camera plane

Camera 1     Camera 2

Image plane

Virtual
Camera

Figure – 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6097394 A
- US 2002067914 A1
- US 6530021 B1
- EP 1404129 A